# EUROPÄISCHE PATENTANMELDUNG

(11) **EP 4 802 877 A1**
(43) Veröffentlichungstag der Anmeldung: **09.09.2026**
(21) Anmeldenummer: 25161306.3
(22) Anmeldetag: 03.03.2025
(51) Int. Cl.: A01D 85/00, A01B 69/04, A01D 90/08

(54) **VERFAHREN ZUR BEWEGUNG EINER VIELZAHL VON BALLEN**

(71) Anmelder: Deere & Company, Moline, IL 61265 (US)
(72) Erfinder: NEERMANN, BENJAMIN, 68163 Mannheim (DE)
(74) Vertreter: Dehnhardt, Florian Christopher

(57) **Zusammenfassung**

Die Erfindung betrifft ein Verfahren zur Bewegung einer Vielzahl von Ballen (12), welche während eines Abtransportvorgangs mittels mindestens eines Sammelfahrzeugs (14) auf einem Erntefeld (10) gesammelt und an einer Lagerstelle (18) innerhalb oder außerhalb des Erntefeldes (10) gelagert werden, wobei eine Lagerposition (P1, P2) der Lagerstelle (18) in Abhängigkeit von den Ballenpositionen der Ballen (12) im Erntefeld (10) bestimmt wird. Die Lagerposition (P1, P2) der Lagerstelle (18) ist während des Abtransportvorgangs veränderbar.

## Beschreibung

Die Erfindung betrifft ein Verfahren zur Bewegung einer Vielzahl von Ballen gemäß dem Oberbegriff des Patentanspruches 1.

Aus US 2019/0289769 A1 ist ein gattungsgemäßes Verfahren bekannt, bei dem ein Sammelfahrzeug innerhalb eines Erntefeldes liegende Ballen aufsammelt und zu einer Lagerstelle innerhalb oder außerhalb des Erntefeldes transportiert, um die Ballen dort aufzuladen. Dabei wird versucht, Fahrzeugwege des Sammelfahrzeugs innerhalb des Erntefeldes kurz zu halten.

Aufgabe der vorliegenden Erfindung ist es, die Effizienz beim Sammeln und Aufladen der Ballen zu verbessern.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Patentanspruch 1 wird ein Verfahren zur Bewegung einer Vielzahl von Ballen vorgeschlagen, welche während eines Abtransportvorgangs auf einem Erntefeld mittels mindestens eines Sammelfahrzeugs gesammelt und an einer Lagerstelle innerhalb oder außerhalb des Erntefeldes gelagert werden. Dabei wird die Lagerposition der Lagerstelle in Abhängigkeit von den im Erntefeld liegenden Ballenpositionen der Ballen bestimmt. Außerdem ist die Lagerposition der Lagerstelle während des Abtransportvorgangs veränderbar. Mit anderen Worten kann die Lagerposition während des Abtransportvorgangs immer wieder neu bestimmt werden.

Der Abtransportvorgang kann verschiedene Arbeitsabläufe beinhalten, insbesondere einen Sammelvorgang (d.h. das Sammeln der Ballen auf dem Erntefeld), einen Transport der gesammelten Ballen zur Lagerstelle und einen Ladevorgang (d.h. das Lagern bzw. Aufladen der gesammelten Ballen an der Lagerstelle).

Die veränderliche Bestimmung der Lagerposition der Lagerstelle kann in Abhängigkeit von den Ballenpositionen und optional auch von weiteren Parametern erfolgen. Eine Veränderung der Lagerposition kann beispielsweise dazu dienen, während des Abtransportvorgangs Fahrstrecken des Sammelfahrzeugs zu optimieren. Insbesondere können hierdurch Fahrstrecken des Sammelfahrzeugs zu den Ballenpositionen und zu der Lagerstelle minimiert werden. Dies reduziert die Kosten für die Arbeitsabläufe während des Abtransportvorgangs. Außerdem werden unerwünschte Bodenverdichtungen auf dem Erntefeld reduziert.

Mit der veränderbaren Lagerposition der Lagerstelle kann auf unvorhersehbare Einflüsse während des Abtransportvorgangs flexibel reagiert werden. Solche Einflüsse können beispielsweise Wetterbedingungen, ein Ausfall eines von mehreren Sammelfahrzeugen oder sich verändernde Bedingungen an der Lagerstelle selbst sein. Trotz dieser Einflüsse kann durch die veränderbare Lagerposition die gewünschte Effizienz des Abtransportvorgangs aufrechterhalten oder sogar verbessert werden.

Das Sammelfahrzeug ist vorzugsweise als eine Arbeitsmaschine (z.B. Schlepper) ausgebildet, welche mit einem geeigneten Ladewerkzeug oder Anbaugerät gekoppelt sein kann, um die Ballen aufzusammeln.

Vorzugsweise beinhaltet die Lagerstelle mindestens ein Transportfahrzeug für den Abtransport der aufgeladenen Ballen. Die Mobilität des Transportfahrzeugs ermöglicht auf technisch einfache Weise flexible Veränderungen der Lagerposition der Lagerstelle. Mit Hilfe des Transportfahrzeugs kann die Lagerstelle während des Abtransportvorgangs jederzeit an eine andere Position versetzt werden, wenn diese andere Position als effizienter ermittelt wird. Mit der Möglichkeit einer veränderten Lagerposition lassen sich das mindestens eine Transportfahrzeug und das mindestens eine Sammelfahrzeug während des Abtransportvorgangs intelligent und im Sinne eines möglichst effizienten Arbeitsablaufs miteinander koordinieren.

Insbesondere beinhaltet die Lagerstelle eine Transportflotte mit mindestens zwei Transportfahrzeugen. Die einzelnen Transportfahrzeuge können gemeinsam an derselben Lagerposition angeordnet sein. Alternativ ist es möglich, zwei oder mehrere Transportfahrzeuge an unterschiedlichen Lagerpositionen anzuordnen und folglich mehrere Teil-Lagerstellen bereitzustellen. Somit wird eine intelligente Koordinierung der Transportfahrzeuge mit dem mindestens einen Sammelfahrzeug weiter unterstützt. Wegen der Veränderbarkeit der Lagerposition(en) ist es also möglich, während des Abtransportvorgangs wahlweise entweder eine gemeinsame Lagerposition aller Transportfahrzeuge oder unterschiedliche Lagerpositionen mehrerer Transportfahrzeuge zu generieren. Auch diese Auswahl ist während des Abtransportvorgangs bedarfsweise wieder veränderbar. Hierdurch kann der Abtransportvorgang noch flexibler und effizienter durchgeführt werden.

Vorzugsweise wird für die Lagerstelle bzw. für jede der vorgenannten Teil-Lagerstellen jeweils ein Positionspfad, d.h. eine Bewegungsstrecke, vorbestimmt, entlang dessen die Lagerstelle bzw. Teil-Lagerstelle während des Abtransportvorgangs zu einer neuen Lagerposition bewegt wird. Eine Vorbestimmung solcher Bewegungsstrecken für die jeweilige Lagerstelle unterstützt logistisch strukturierte Veränderungen bzw. Optimierungen der Lagerstelle, wenn dies während des Abtransportvorgangs als sinnvoll ermittelt wird, insbesondere zur Effizienzverbesserung des Abtransportvorgangs.

Weiter vorzugsweise wird in Abhängigkeit von dem vorbestimmten Positionspfad eine Fahrzeugfunktion des Transportfahrzeugs gesteuert. Bei der Fahrzeugfunktion des Transportfahrzeugs handelt es sich beispielsweise um eine Lenkfunktion oder um eine Fahrfunktion (z.B. Fahrstrategie, Fahrgeschwindigkeit, Vor-/Rückwärtsfahrt) des Transportfahrzeugs. Die Steuerung des Transportfahrzeugs in Abhängigkeit des vorbestimmten Positionspfads erfolgt insbesondere mittels geeigneter Steuermittel, welche innerhalb und/oder außerhalb des Transportfahrzeugs angeordnet sein können.

Beispielsweise werden der Positionspfad in einer im Sammelfahrzeug angeordneten Steuereinheit generiert und entsprechende Steuerdaten einer ebenfalls im Sammelfahrzeug angeordneten Sendeeinheit mitgeteilt. Diese Sendeeinheit kann mit einer im Transportfahrzeug angeordneten Empfangseinheit kommunizieren, welche die interne Lenkfunktion oder die interne Fahrfunktion des Transportfahrzeugs mit den Steuerdaten versorgt.

Durch den vorbestimmten Positionspfad wird eine Automatisierung des Abtransportvorgangs unterstützt. Beispielsweise kann der vorbestimmte Positionspfad für ein (teil-)autonom agierendes Transportfahrzeug verwendet werden.

In einer weiteren bevorzugten Ausführungsform ist das Transportfahrzeug als ein teil- oder vollautonomes Fahrzeug ausgebildet. Dessen Fahrzeugfunktionen lassen sich dann zumindest teilweise automatisiert steuern, was zu einem höheren Automatisierungsgrad des Abtransportvorgangs beiträgt. Die Steuerung kann innerhalb und/oder außerhalb des Transportfahrzeugs angeordnet sein. Beispielsweise sind in dem Sammelfahrzeug geeignete Steuermittel enthalten, welche mit dem Transportfahrzeug kommunizieren. Alternativ können die Steuermittel Bestandteil einer innerhalb oder außerhalb des Erntefeldes positionierten Steuerzentrale sein. Gleichwohl kann bei dem teil- oder vollautonomen Transportfahrzeug eine Fahrperson in der Fahrzeugkabine als manuelle Rückfallebene vorgesehen sein.

Vorteilhaft wird für das Sammelfahrzeug ein Ballenpfad, d.h. eine Fahrstrecke vorbestimmt, entlang dessen Ballen gesammelt und gesammelte Ballen zu der Lagerstelle transportiert werden. Eine Vorbestimmung solcher Fahrstrecken für das mindestens eine Sammelfahrzeug unterstützt eine logistisch effiziente Durchführung des Abtransportvorgangs.

Weiter vorteilhaft wird für das Sammelfahrzeug ein Arbeitsplan zum Sammeln der Ballen und zum Lagern der gesammelten Ballen an der Lagerstelle, insbesondere Aufladen der gesammelten Ballen auf ein Transportfahrzeug, vorbestimmt. Der Arbeitsplan unterstützt ein strukturiertes und zeiteffizientes Sammeln der Ballen und Lagern bzw. Aufladen der gesammelten Ballen an der Lagerstelle.

In einer weiteren bevorzugten Ausführungsform wird in Abhängigkeit von dem vorbestimmten Ballenpfad und/oder dem vorbestimmten Arbeitsplan eine Fahrzeugfunktion des Sammelfahrzeugs gesteuert. Bei der Fahrzeugfunktion des Sammelfahrzeugs handelt es sich beispielsweise um eine Lenkfunktion oder eine Fahrfunktion (z.B. Fahrstrategie, Geschwindigkeit, Vor-/Rückwärtsfahrt) des Sammelfahrzeugs. Hierdurch wird ein automatisierter Verfahrensablauf unterstützt, indem das Sammelfahrzeug beispielsweise automatisch zu bestimmten Ballen und zur Lagerstelle bzw. zu dem Transportfahrzeug fährt. Die Steuerung des Sammelfahrzeugs in Abhängigkeit von dem vorbestimmten Ballenpfad und/oder dem vorbestimmten Arbeitsplan erfolgt insbesondere mittels geeigneter Steuermittel, welche innerhalb und/oder außerhalb des Sammelfahrzeugs angeordnet sein können.

Im Falle einer kombinierten Anwendung des Ballenpfads und des Arbeitsplans können sowohl die Fahrstrecken des Sammelfahrzeugs zu den Ballen sowie zwischen den Ballen und der Lagerstelle (insbesondere Transportfahrzeug) als auch das Aufsammeln der Ballen und deren Lagern bzw. Aufladen an der Lagerstelle automatisiert werden. Ein Wechsel zwischen manueller Bedienung durch eine Fahrperson für das Sammeln und Lagern der Ballen einerseits und automatisierter Fahrabläufe des Sammelfahrzeugs andererseits ist dann überflüssig. Gleichwohl kann bei dieser Automatisierung zur Überwachung des Abtransportvorgangs und als Rückfallebene bei etwaigen technischen Störungen die Fahrperson in dem Sammelfahrzeug anwesend sein.

Weiter vorzugsweise wird in Abhängigkeit von dem vorbestimmten Arbeitsplan eine Werkzeugfunktion (z.B. Bewegung, Greifen, Laden) eines Ladewerkzeugs (z.B. Ladegabel, Klemmzange, Schaufel) gesteuert, welches am Sammelfahrzeug angeordnet ist und zum Sammeln und Laden der Ballen dient. Auf Basis des ermittelten Arbeitsplanes können Arbeitsbewegungen des Ladewerkzeugs automatisiert ohne eine Fahrperson durchgeführt werden. Zu diesem Zweck können beispielsweise die Daten des Arbeitsplans an eine Steuereinheit des Sammelfahrzeugs gesendet werden, welche das Ladewerkzeug ansteuert, um Ballen zu greifen oder an der Lagerstelle, insbesondere am Transportfahrzeug, zu lagern bzw. aufzuladen.

Wie bereits erwähnt, kann eine Automatisierung des Abtransportvorgangs durch den vorbestimmten Ballenpfad und/oder vorbestimmten Arbeitsplan unterstützt werden. Beispielsweise kann der vorbestimmte Ballenpfad und/oder vorbestimmte Arbeitsplan für ein (teil-)autonom agierendes Transportfahrzeug verwendet werden.

Weiter vorzugsweise ist das Sammelfahrzeug als ein teil- oder vollautonomes Fahrzeug ausgebildet. Dessen Fahrzeugfunktionen lassen sich dann zumindest teilweise automatisiert steuern, wodurch ein höherer Automatisierungsgrad des Abtransportvorgangs unterstützt wird. Die Steuerung kann innerhalb und/oder außerhalb des Sammelfahrzeugs angeordnet sein. Beispielsweise sind in dem Sammelfahrzeug geeignete Steuermittel enthalten, welche einzelne Fahrzeugfunktionen des Sammelfahrzeugs, beispielsweise eine Lenkfunktion, Fahrfunktion (z.B. Fahrstrategie, Fahrgeschwindigkeit, Vor-/Rückwärtsfahrt) oder Werkzeugfunktion des Ladewerkzeugs, ansteuern können. Optional können diese Steuermittel auch mit dem Transportfahrzeug kommunizieren, um zusätzlich auch Fahrzeugfunktionen, insbesondere eine Lenkfunktion oder Fahrfunktion (z.B. Fahrstrategie, Fahrgeschwindigkeit, Vor-/Rückwärtsfahrt) des Transportfahrzeugs, zu steuern. Alternativ können die vorgenannten Steuermittel Bestandteil einer innerhalb oder außerhalb des Erntefeldes positionierten Steuerzentrale sein. Gleichwohl kann bei dem (teil-)autonomen Sammelfahrzeug eine Fahrperson in der Fahrzeugkabine als manuelle Rückfallebene vorgesehen sein.

Der Positionspfad und/oder der Ballenpfad und/oder der Arbeitsplan werden vorzugsweise in Abhängigkeit von mindestens einem geeigneten Parameter vorbestimmt. Solche Parameter werden beispielsweise durch mindestens eine der folgenden Größen bzw. Merkmale repräsentiert:
Mindestens ein ballenbezogenes Merkmal der Ballen (z.B. Ballenposition, Gewicht, Größe, Form, Typ);
mindestens ein feldbezogenes Merkmal des Erntefeldes (z.B. Topographie, Fläche, Außengrenzen);
mindestens ein fahrzeugbezogenes Merkmal des Sammelfahrzeugs (z.B. Anzahl, Position);
mindestens ein werkzeugbezogenes Merkmal eines Ladewerkzeugs des Sammelfahrzeugs (z.B. Typ des Ladewerkzeugs, Ballen-Aufnahmekapazität);
mindestens ein fahrzeugbezogenes Merkmal des Transportfahrzeugs (z.B. Position, Anzahl, Ladekapazität zum Aufladen der Ballen, bei mehreren Fahrzeugen ihre Reihenfolge der Ankunft auf dem Erntefeld);
mindestens ein umgebungsbezogenes Merkmal des Sammelfahrzeugs (z.B. Gegenstände auf dem Erntefeld wie etwa Ballen oder Hindernisse, eine aktuelle Position oder Status des Ladewerkzeugs, spezifische Anordnung von bereits gelagerten Ballen an der Lagerstelle, andere Umgebungsmerkmale).

Die vorgenannten Parameter bzw. Merkmale sind dazu geeignet, für das Sammelfahrzeug optimierte, insbesondere möglichst kurze Fahrstrecken (Ballenpfad) zu den Ballen und zu dem mindestens einen Transportfahrzeug vorzubestimmen bzw. zu ermitteln. Es können auch optimierte, insbesondere möglichst kurze Fahrstrecken (Positionspfad) für das Transportfahrzeug vorbestimmt werden. Dabei kann der Positionspfad auch derart vorbestimmt werden, dass abhängig vom Beladungsgrad des Transportfahrzeugs mit Ballen dessen Lagerposition für eine möglichst geringe Bodenverdichtung verändert wird. Die Lagerposition des Transportfahrzeugs kann beispielsweise auch abhängig von einer aktuellen Ballen-Aufnahmekapazität des Sammelfahrzeugs, d.h. abhängig von der Anzahl der durch das Ladewerkzeug gleichzeitig aufnehmbaren Ballen, verändert werden.

Vorgenannte Parameter bzw. Merkmale können auch dazu genutzt werden, eine effiziente oder optimierte Sammel- und Ladestrategie (Arbeitsplan) für das mindestens eine Sammelfahrzeug zu generieren. Hierbei werden vorzugsweise die Ballen-Aufnahmekapazität des Sammelfahrzeugs und der aktuelle Ladezustand an der Lagerstelle, insbesondere Transportfahrzeug, berücksichtigt. Da sich die erfassten Parameter während der Durchführung des Arbeitsplans ändern können, ist auch eine entsprechende Anpassung des Arbeitsplans während der Ausführung des Sammel- und Lagervorgangs möglich. Hierdurch kann das Sammeln und Laden der Ballen bei Bedarf im Sinne eines effizienten Arbeitsablaufs kontinuierlich angepasst werden.

Ganz allgemein können der Transportpfad und/oder der Ballenpfad und/oder der Arbeitsplan während des Abtransportvorgangs verändert bzw. angepasst werden, um Effizienzpotentiale beim Abtransport zu nutzen.

Vorzugsweise wird mindestens ein Parameter bzw. dessen Werte von Sensorsignalen einer am Sammelfahrzeug angeordneten Sensorik repräsentiert. Mit anderen Worten können verschiedene am Sammelfahrzeug angebrachte Sensoren (z.B. Kamera, Lidar, Radar, Ultraschall) die Sensordaten bereitstellen, welche benötigt werden, um eine effiziente und insbesondere automatisierte Durchführung des Abtransportvorgangs zu unterstützen. Die Sensordaten können beispielsweise die Generierung des Arbeitsplans unterstützen. Geeignete Sensordaten können auch einen automatisierten Sammel- und Lagervorgang für das Sammelfahrzeug ermöglichen und insbesondere dazu beitragen, ein vollautonomes Sammelfahrzeug zu realisieren.

Zur Durchführung des Verfahrens ist vorzugsweise ein System mit geeigneten Steuermitteln vorgesehen. Diese Steuermittel verarbeiten unterschiedliche Daten und können in Abhängigkeit von der Datenverarbeitung Funktionen des mindestens einen Sammelfahrzeugs und/oder des mindestens einen Transportfahrzeugs steuern. Diese Steuerung kann beispielsweise eine Fahrfunktion (z.B. Lenkung, Fahrgeschwindigkeit, Vor-/Rückwärtsfahrt) des Sammelfahrzeugs und/oder des Transportfahrzeugs betreffen. Die Steuerung kann auch die Bewegungssteuerung eines Ladewerkzeugs des Sammelfahrzeugs betreffen, wobei mittels des Ladewerkzeugs das Sammeln von Ballen und deren Aufladen an der Lagerstelle durchgeführt wird.

Die vorgenannten Steuermittel unterstützen eine automatisierte Durchführung des Verfahrens und folglich auch eine effizientere Bewegung (Sammeln, Aufladen bzw. Lagern an der Lagerstelle) der Ballen. Die Automatisierung ermöglicht auch einen effizienten Einsatz teil- oder vollautonomer Sammelfahrzeuge und/oder Transportfahrzeuge.

Die Steuermittel umfassen insbesondere mindestens eine geeignete Steuereinheit. Vorzugsweise ist die mindestens eine Steuereinheit vollständig im Sammelfahrzeug angeordnet. Bei dieser Variante erfolgt eine Steuerung von Funktionen des Transportfahrzeugs bzw. der Transportflotte insbesondere über eine drahtlose Funkverbindung zwischen dem Sammelfahrzeug und dem oder den zu steuernden Transportfahrzeug(en). Alternativ ist die mindestens eine Steuereinheit zumindest teilweise außerhalb des Sammelfahrzeugs angeordnet, z.B. in einer Steuerzentrale. Die Steuerzentrale kann sich innerhalb oder außerhalb des Erntefeldes befinden.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Draufsicht eines Erntefeldes mit Ballen, einem Sammelfahrzeug und einer Lagerstelle, und
- Fig. 2: eine blockschaltbildartige Darstellung eines Systems zur Durchführung des erfindungsgemäßen Verfahrens in einer ersten Ausführungsform, und
- Fig. 3: eine blockschaltbildartige Darstellung eines Systems zur Durchführung des erfindungsgemäßen Verfahrens in einer zweiten Ausführungsform.

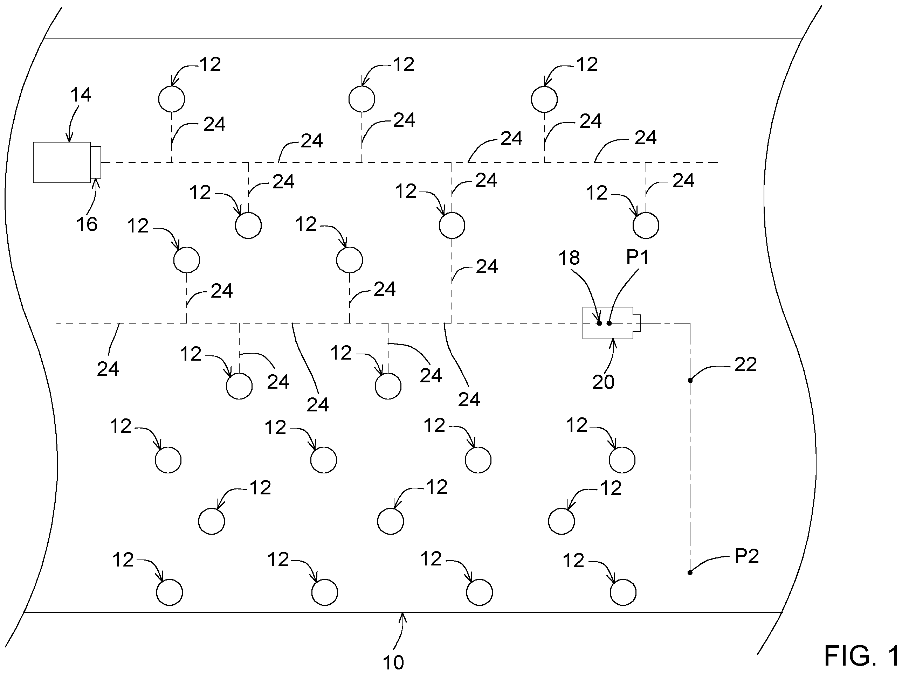

Fig. 1 zeigt schematisch und ausschnittsweise ein Erntefeld 10 mit einer Vielzahl von Ballen 12, welche von einem Sammelfahrzeug 14 mit einem Ladewerkzeug 16 gesammelt und zu einer Lagerstelle 18 transportiert werden. Dieser Vorgang wird je nach Anzahl der abzutransportierenden Ballen 12 und der Ladekapazität des Sammelfahrzeugs 14 gegebenenfalls mehrfach wiederholt. Die Ballen 12 werden hierbei an der Lagerstelle 18 gelagert. Im Ausführungsbeispiel befindet sich an der Lagerstelle 18 ein Transportfahrzeug 20, auf welches die Ballen 12 mittels des Sammelfahrzeugs 14 aufgeladen werden.

Für den Abtransportvorgang mit dem Sammeln und Lagern der Ballen 12 an der Lagerstelle 18 können optional auch mehrere Sammelfahrzeuge 14 und/oder mehrere Transportfahrzeuge 20 eingesetzt werden. Die Fahrzeuge 14, 20 können von Fahrpersonen manuell gesteuert werden. Alternativ können einzelne Fahrzeuge (z.B. das mindestens eine Sammelfahrzeug 14) oder sämtliche Fahrzeuge 14, 20 (teil-)autonom ausgebildet sein und zumindest teilweise automatisiert gesteuert werden. Hierbei kann auf Fahrpersonen in den Fahrzeugen 14, 20 vollständig verzichtet werden oder die Fahrpersonen befinden sich als manuelle Rückfallebene in den Fahrzeugen 14, 20.

Mittels des mindestens einen Transportfahrzeugs 20 ist eine mobile Lagerstelle 18 für die Ballen 12 realisiert. Während des Abtransportvorgangs kann die Position der Lagerstelle 18 deshalb bei Bedarf verändert werden. Beispielsweise erhält die Lagerstelle 18 ausgehend von einer Lagerposition P1 während des Abtransportvorgangs eine veränderte Lagerposition P2.

Die Lagerstelle 18, insbesondere das Transportfahrzeug 20 wird entlang eines vorbestimmten Positionspfades 22 zu der neuen Lagerposition P2 überführt. Hierdurch können während des Abtransportvorgangs beispielsweise Fahrstrecken des Sammelfahrzeugs 14 zu der Lagerstelle 18 weiter reduziert werden. Unerwünschte Bodenverdichtungen durch das Transportfahrzeug 20 können ebenfalls reduziert werden, indem das Transportfahrzeug 20 bereits ab einem bestimmten Beladungsgrad mit Ballen 12 beispielsweise an einen Randbereich des Erntefeldes 10 zu der neuen Lagerposition P2 gefahren wird.

Für die Fahrstrecken des Sammelfahrzeugs 14 wird ein Ballenpfad 24 vorbestimmt. Somit erhält das Sammelfahrzeug 14 definierte Fahrstrecken zum Heranfahren an die Ballen 12 und zum Transportieren der gesammelten Ballen 12 zu der Lagerstelle 18. Der Ballenpfad 24 kann in Abhängigkeit von spezifischen Kriterien (z.B. Minimierung einer Gesamtfahrstrecke des Sammelfahrzeugs 14 auf dem Erntefeld 10) ermittelt bzw. vorbestimmt werden.

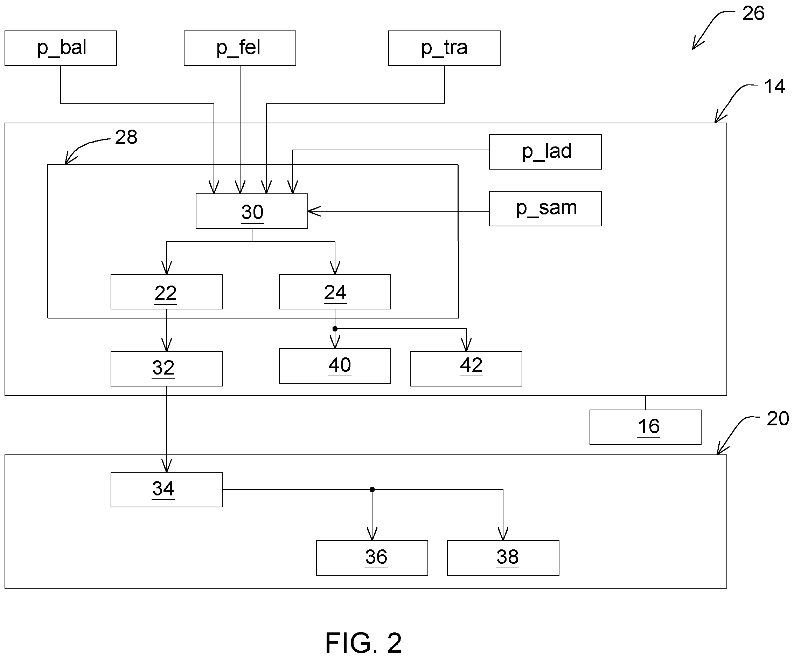

Fig. 2 zeigt ein System 26 zur Durchführung des Abtransportvorgangs. Das System enthält mindestens ein Sammelfahrzeug 14, mindestens ein Transportfahrzeug 20 und Steuermittel. Bei der Ausführungsform gemäß Fig. 2 weisen die Steuermittel eine Steuereinheit 28 auf, welche in dem Sammelfahrzeug 14 angeordnet ist. Ein in der Steuereinheit 28 enthaltener Optimierungsalgorithmus 30 ermittelt den Transportpfad 22 und den Ballenpfad 24. Die Vorbestimmung des Transportpfades 22 und des Ballenpfades 24 durch den Optimierungsalgorithmus 30 erfolgt in Abhängigkeit von Eingangsdaten für die Steuereinheit 28.

Diese Eingangsdaten können beispielsweise durch geeignete Sensoren generiert werden und/oder stehen als bereitgestellte Informationen zur Verfügung. Sie repräsentieren beispielsweise nachfolgende Parameter bzw. Merkmale:
Mindestens ein ballenbezogenes Merkmal p_bal der Ballen 12 (z.B. Ballenposition, Gewicht, Größe, Form, Typ);
mindestens ein feldbezogenes Merkmal p_fel des Erntefeldes 10 (z.B. Topographie, Fläche, Außengrenzen);
mindestens ein fahrzeugbezogenes Merkmal p_sam des Sammelfahrzeugs 14 (z.B. Anzahl, Position);
mindestens ein werkzeugbezogenes Merkmal p_lad des Ladewerkzeugs 16 des Sammelfahrzeugs 14 (z.B. Typ des Ladewerkzeugs 16, Ballen-Aufnahmekapazität);
mindestens ein fahrzeugbezogenes Merkmal p_tra des Transportfahrzeugs 20 (z.B. Position, Anzahl, Ladekapazität zum Aufladen der Ballen 12, bei mehreren Transportfahrzeugen 20 deren
Reihenfolge der Ankunft auf dem Erntefeld 10).
Weitere, hier nicht offenbarte Parameter bzw. Merkmale können ebenfalls als Eingangsdaten für den Optimierungsalgorithmus 30 vorgesehen sein.

Die Steuereinheit 28 überträgt die Daten des vorbestimmten Transportpfades 22 zu einer Sendeeinheit 32, welche vorzugsweise in dem Sammelfahrzeug 14 angeordnet ist. Die Sendeeinheit 32 kommuniziert mit einer Empfangseinheit 34, welche vorzugsweise in dem Transportfahrzeug 20 integriert ist. Die von der Empfangseinheit 34 empfangenen Daten können dann als Steuerdaten verwendet werden, um einzelne Fahrzeugfunktionen des Transportfahrzeugs 20 zu steuern, beispielsweise eine Lenkeinheit 36 und eine Fahrstrategieeinheit 38 (z.B. Fahrstrategie, Fahrgeschwindigkeit, Vor-/Rückwärtsfahrt). Hierdurch können die Fahrstrecken des Transportfahrzeugs 20 während des Abtransportvorgangs automatisiert werden. Alternativ können die von der Empfangseinheit 34 empfangenen Daten im Transportfahrzeug 20 durch geeignete Mittel (z.B. Bildschirmeinheit oder Navigationssystem)) akustisch und/oder visuell wiedergegeben werden, damit eine Fahrperson das Transportfahrzeug 20 entsprechend des vorbestimmten Transportpfades 22 steuern kann.

Weiterhin dient die Steuereinheit 28 dazu, mit Hilfe der dem vorbestimmten Ballenpfad 24 entsprechenden Steuerdaten einzelne Fahrzeugfunktionen des Sammelfahrzeugs 14 anzusteuern, beispielsweise eine Lenkfunktionseinheit 40 und eine Fahrfunktionseinheit 42 (z.B. Fahrstrategie, Fahrgeschwindigkeit, Vor-/Rückwärtsfahrt). Hierdurch können die Fahrstrecken des Sammelfahrzeugs 14 während des Abtransportvorgangs automatisiert werden. Alternativ können die Daten des Ballenpfads 24 im Sammelfahrzeug 14 durch geeignete Mittel (z.B. Bildschirmeinheit oder Navigationssystem) akustisch und/oder visuell wiedergegeben werden, damit eine Fahrperson das Sammelfahrzeug 14 entsprechend des vorbestimmten Ballenpfads 24 steuern kann.

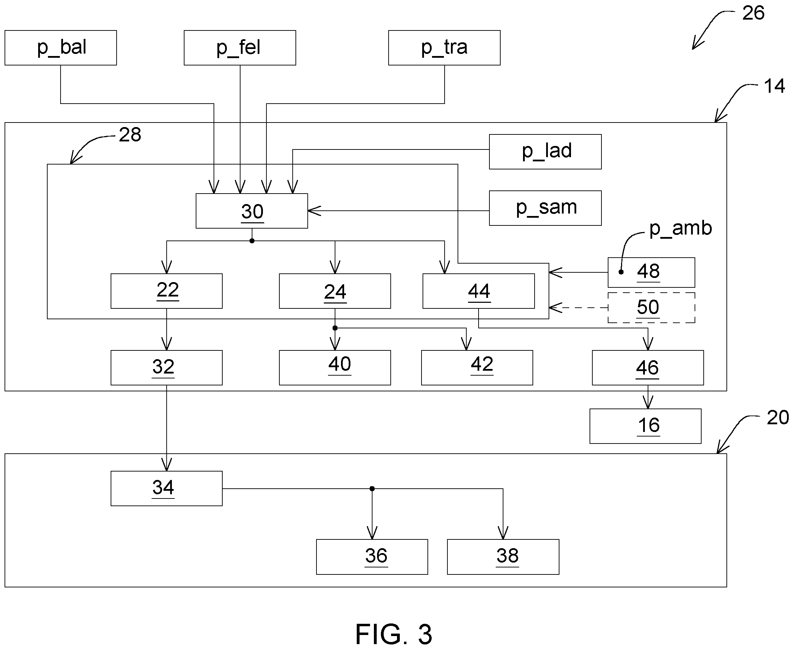

Fig. 3 zeigt eine weitere Ausführungsform des Systems 26. Bei dieser Ausführungsform ermittelt der Optimierungsalgorithmus 30 neben dem Transportpfad 22 und dem Ballenpfad 24 zusätzlich einen Arbeitsplan 44. In Abhängigkeit von dem vorbestimmten Arbeitsplan 44 steuert die Steuereinheit 28 eine Werkzeugfunktion des Ladewerkzeugs 16. Hierbei ist eine im Sammelfahrzeug 14 integrierte Ladesteuerungseinheit 46 zur Steuerung der Bewegungs- und Arbeitsabläufe des Ladewerkzeugs 16 vorgesehen. Der vorbestimmte Arbeitsplan ermöglicht somit ein automatisiertes Sammeln und Laden der Ballen 12 ohne Aktivitäten einer Fahrperson im Sammelfahrzeug 14.

Der Arbeitsplan 44 kann in Abhängigkeit von mindestens einem der bereits genannten Parameter vorbestimmt werden. Zusätzlich wird der Arbeitsplan 44 auch in Abhängigkeit von mindestens einem umgebungsbezogenen Merkmal p_amb der Umgebung des Sammelfahrzeugs 14 ermittelt bzw. vorbestimmt. Das mindestens eine umgebungsbezogene Merkmal p_amb des Sammelfahrzeugs 14 können beispielsweise Gegenstände auf dem Erntefeld 10 wie etwa Ballen 12 oder Hindernisse, eine aktuelle Position oder ein Status des Ladewerkzeugs 16, eine spezifische Anordnung von bereits gelagerten Ballen 12 an der Lagerstelle 18 bzw. am Transportfahrzeug 20 oder andere Umgebungsmerkmale sein.

Der mindestens eine Parameter bzw. Merkmal p_amb wird durch Sensorsignale bzw. Sensordaten einer am Sammelfahrzeug 14 und/oder seinem Ladewerkzeug 16 angeordneten Sensorik 48 repräsentiert. Die Sensorsignale bzw. Sensordaten werden an die Steuereinheit 28 übertragen und von letzterer bei der Ermittlung des Arbeitsplans 44 berücksichtigt.

Die notwendige technische Ausstattung der Sensorik 48 (z.B. Kamera, Lidar, Radar, Ultraschall) ist von dem gewünschten Automatisierungsgrad des Abtransportvorgangs abhängig. Für ein automatisiertes Sammeln und Laden der Ballen 12 sind im Allgemeinen weniger Sensorik-Komponenten notwendig als für ein vollautonomes Sammelfahrzeug 14, welches neben dem automatisierten Sammeln und Laden der Ballen 12 auch sämtliche weiteren Funktionen während des Abtransportvorgangs selbstständig automatisiert, d.h. fahrerlos durchführt.

Bei der vollautonomen Variante des Sammelfahrzeugs 14 kann neben der Sensorik 48 erforderlichenfalls auch ein (oder mehrere) zusätzliches System 50 vorhanden sein, dessen Daten an die Steuereinheit 28 gesendet werden.

## Patentansprüche

1. Verfahren zur Bewegung einer Vielzahl von Ballen (12), welche während eines Abtransportvorgangs mittels mindestens eines Sammelfahrzeugs (14) auf einem Erntefeld (10) gesammelt und an einer Lagerstelle (18) innerhalb oder außerhalb des Erntefeldes (10) gelagert werden, wobei eine Lagerposition (P1, P2) der Lagerstelle (18) in Abhängigkeit von den Ballenpositionen der Ballen (12) im Erntefeld (10) bestimmt wird,
**dadurch gekennzeichnet, dass**
die Lagerposition (P1, P2) der Lagerstelle (18) während des Abtransportvorgangs veränderbar ist.

2. Verfahren nach Anspruch 1, **dadurch gekennzeichnet, dass** die Lagerstelle (18) mindestens ein Transportfahrzeug (20) für den Abtransport der gelagerten Ballen (12) beinhaltet.

3. Verfahren nach Anspruch 1 oder 2, **dadurch gekennzeichnet, dass** die Lagerstelle (18) eine Transportflotte mit mindestens zwei Transportfahrzeugen (20) beinhaltet.

4. Verfahren nach einem der vorhergehenden Ansprüche, **dadurch gekennzeichnet, dass** für die Lagerstelle (18) ein Positionspfad (22) zur Veränderung der Position (P1, P2) der Lagerstelle (18) vorbestimmt wird.

5. Verfahren nach Anspruch 4, **dadurch gekennzeichnet, dass** in Abhängigkeit von dem vorbestimmten Positionspfad (22) eine Fahrzeugfunktion (36, 38) des Transportfahrzeugs (20) gesteuert wird.

6. Verfahren nach einem der vorhergehenden Ansprüche, **dadurch gekennzeichnet, dass** das Transportfahrzeug (20) als autonomes Fahrzeug ausgebildet gesteuert wird.

7. Verfahren nach einem der vorhergehenden Ansprüche, **dadurch gekennzeichnet, dass** für das Sammelfahrzeug (14) ein Ballenpfad (24) zum Heranfahren an die Ballen (12) und zum Transportieren der gesammelten Ballen (12) zu der Lagerstelle (18) vorbestimmt wird.

8. Verfahren nach einem der vorhergehenden Ansprüche, **dadurch gekennzeichnet, dass** für das Sammelfahrzeug (14) ein Arbeitsplan (44) zum Sammeln der Ballen (12) und Lagern der gesammelten Ballen (12) an der Lagerstelle (18) vorbestimmt wird.

9. Verfahren nach Anspruch 7 oder 8, **dadurch gekennzeichnet, dass** in Abhängigkeit von dem vorbestimmten Ballenpfad (24) und/oder dem vorbestimmten Arbeitsplan (44) eine Fahrzeugfunktion (40, 42, 46) des Sammelfahrzeugs (14) gesteuert wird.

10. Verfahren nach Anspruch 8 oder 9, **dadurch gekennzeichnet, dass** in Abhängigkeit von dem vorbestimmten Arbeitsplan (44) eine Werkzeugfunktion (46) eines Ladewerkzeugs (16) gesteuert wird, welches zum Sammeln und Laden der Ballen (12) am Sammelfahrzeug (14) angeordnet ist.

11. Verfahren nach einem der vorhergehenden Ansprüche, **dadurch gekennzeichnet, dass** das Sammelfahrzeug (14) als autonomes Fahrzeug ausgebildet gesteuert wird.

12. Verfahren nach einem der Ansprüche 4 bis 11, **dadurch gekennzeichnet, dass** der Positionspfad (22) und/oder der Ballenpfad (24) und/oder der Arbeitsplan (44) in Abhängigkeit von mindestens einem der folgenden Parameter vorbestimmt wird:
- mindestens ein ballenbezogenes Merkmal (p_bal) der Ballen (12),
- mindestens ein feldbezogenes Merkmal (p_fel) des Erntefeldes (10),
- mindestens ein fahrzeugbezogenes Merkmal (p_sam) des Sammelfahrzeugs (14),
- mindestens ein werkzeugbezogenes Merkmal (p_lad) eines Ladewerkzeugs (16) des Sammelfahrzeugs (14),
- mindestens ein fahrzeugbezogenes Merkmal (p_tra) des Transportfahrzeugs (20),
- mindestens ein umgebungsbezogenes Merkmal (p_amb) der Umgebung des Sammelfahrzeugs (14).

13. Verfahren nach Anspruch 12, **dadurch gekennzeichnet, dass** mindestens ein Parameter (p_amb) mittels Sensorsignale einer am Sammelfahrzeug (14) angeordneten Sensorik (48) repräsentiert wird.

14. System (26) mit einer Steuereinheit (28) zur Durchführung des Verfahrens nach einem der vorhergehenden Ansprüche.
